# EUROPEAN PATENT APPLICATION

(11) **EP 4 459 780 A1**
(43) Date of publication of application: **06.11.2024**
(21) Application number: 23745967.2
(22) Date of filing: 10.01.2023
(51) Int. Cl.: H01M 50/531, H01M 50/502, H01M 50/519, H01M 10/42

(54) **BATTERY CONTROL CIRCUIT, BATTERY, AND ELECTRONIC DEVICE**

(30) Priority: 30.01.2022 CN 202220250819 U; 10.05.2022 CN 202221113226 U
(71) Applicant: BYD Company Limited, Shenzhen, Guangdong 518118 (CN)
(72) Inventor: HAN, Pengwei, Shenzhen, Guangdong 518118 (CN)
(74) Representative: Dehns Germany Partnerschaft mbB
(86) International application number: PCT/CN2023/071742
(87) International publication number: WO 2023/143084

(57) **Abstract**

A battery control circuit, a battery, and an electronic device are provided. The battery control circuit includes a first connection end, a second connection end, and a circuit protection module. The first connection end includes a positive electrode, a first negative electrode, and a second negative electrode. The second connection end includes a first positive electrode end, a first negative electrode end, a second positive electrode end, and a second negative electrode end. The circuit protection module includes a first switch unit, a second switch unit, and a control unit. The first switch unit is connected between the positive electrode and the first positive electrode end. The second switch unit is connected between the positive electrode and the second positive electrode end. The control unit is configured to control the first switch unit and the second switch unit to be turned on or turned off

## Description

### CROSS-REFERENCE TO RELATED APPLICATIONS

This application claims priority to Chinese Patent Application No. 202220250819.3 filed on January 30, 2022 and entitled "BATTERY CONTROL CIRCUIT, CHARGING PROTECTION APPARATUS, BATTERY, AND ELECTRONIC DEVICE" and Chinese Patent Application No. 202221113226.9 filed on May 10, 2022 and entitled "BATTERY CONTROL CIRCUIT, CHARGING PROTECTION APPARATUS, BATTERY, AND ELECTRONIC DEVICE". The entire content of the above-referenced applications is incorporated herein by reference.

### FIELD

The present disclosure relates to the field of batteries, and in particular, to a battery control circuit, a battery, and an electronic device.

### BACKGROUND

With rapid development of a battery fast charging technology, high-power charging has higher and higher requirements on batteries. During high-current charging, a temperature rise of a battery is required to be as low as possible, which poses a great challenge to a design of a charging protection apparatus.

An existing fast charging design uses advantages of a three-tab battery core, which can effectively shorten a charging path of a high current on the charging protection apparatus, thereby reducing impedance and reducing heat generation. A specific implementation method is that there are two flexible printed circuits (FPCs) on the charging protection apparatus to connect a mobile phone terminal, positive electrodes of the two FPCs are respectively connected to a positive nickel plate of the charging protection apparatus through shortest paths, and negative electrodes of the two FPCs are respectively connected to switching metal oxide semiconductors (MOSs) and then are connected to negative nickel plates of the charging protection apparatus to form a charging and discharging circuit.

At present, a metal housing of a battery core of a battery developed at present has negative polarity, an electronic device compartment (that is, an area where the battery is mounted) is connected to ground of an electronic device system, and the ground of the system has the negative polarity, so the electronic device compartment has the negative polarity. For safety, the metal housing has to adopt a complete insulation solution, that is, a thickness of the battery core in increased, which leads to loss of battery core capacity.

### SUMMARY

The present disclosure aims to solve at least one of the technical problems existing in a related art.

To solve the above technical problem, technical solutions of the present disclosure are as follows:
A first aspect of the present disclosure provides a battery control circuit, including a first connection end, a second connection end, and a circuit protection module. The first connection end is configured to connect a battery core of a battery. The first connection end includes a positive electrode, a first negative electrode, and a second negative electrode. The second connection end is configured to connect a device outside the battery. The second connection end includes a first positive electrode end, a first negative electrode end, a second positive electrode end, and a second negative electrode end. The circuit protection module includes a first switch unit, a second switch unit, and a control unit. The first switch unit is connected between the positive electrode and the first positive electrode end. The positive electrode, the first switch unit, and the first positive electrode end are connected, and the first negative electrode end and the first negative electrode are connected to form a first conductive path. The second switch unit is connected between the positive electrode and the second positive electrode end. The positive electrode, the second switch unit, and the second positive electrode end are connected, and the second negative electrode end and the second negative electrode are connected to form a second conductive path. The control unit is configured to control the first switch unit to be turned on or turned off and control the second switch unit to be turned on or turned off.

In an embodiment, a difference between a voltage output by the control unit and a voltage of the positive electrode is greater than or equal to 4 V

In an embodiment, the circuit protection module further includes a current sampling unit. The current sampling unit is connected in series between the first positive electrode end and the positive electrode. The current sampling unit is further connected in series between the second positive electrode end and the positive electrode. The control unit is configured to control the first switch unit and the second switch unit to be turned on or turned off based on a sampling current value of the current sampling unit.

In an embodiment, the first switch unit includes a first switch. The first switch is connected in series between the first positive electrode end and the positive electrode. The second switch unit includes a second switch. The second switch is connected in series between the second positive electrode end and the positive electrode. The control unit includes a first controller. The first controller is connected to each of the first switch, the second switch, and the current sampling unit to form a first protection circuit. The first protection circuit is configured to control the first switch and the second switch to be turned on or turned off based on the sampling current value of the current sampling unit.

In an embodiment, the first protection circuit further includes a first voltage sampling resistor and a second voltage sampling resistor. The first controller is configured to sample a first voltage value between the first negative electrode and the positive electrode through the first voltage sampling resistor, and sample a second voltage value between the positive electrode and the second negative electrode through the second voltage sampling resistor to obtain a first mean voltage of the first voltage value and the second voltage value.

In an embodiment, the first controller is further configured to obtain a sampling current value of the current sampling unit, and control the first switch and the second switch to be turned off when at least one of the sampling current value or the first mean voltage exceeds a corresponding protection threshold.

In an embodiment, the first switch unit includes a third switch. The third switch is connected in series between the first positive electrode end and the positive electrode. The second switch unit includes a fourth switch. The fourth switch is connected in series between the second positive electrode end and the positive electrode. The control unit includes a second controller. The second controller is connected to each of the third switch, the fourth switch, and the current sampling unit to form a second protection circuit. The second protection circuit is configured to control the third switch unit and the fourth switch to be turned on or turned off based on the sampling current value of the current sampling unit.

In an embodiment, the second protection circuit further includes a third voltage sampling resistor and a fourth voltage sampling resistor. The second controller is configured to sample a third voltage value between the first negative electrode and the positive electrode through the third voltage sampling resistor, and sample a fourth voltage value between the positive electrode and the second negative electrode through the fourth voltage sampling resistor to obtain a second mean voltage of the third voltage value and the fourth voltage value.

In an embodiment, the second controller is further configured to obtain a sampling current value of the current sampling unit, and control the third switch and the fourth switch to be turned off when at least one of the sampling current value or the second mean voltage exceeds a corresponding protection threshold.

In an embodiment, the first positive electrode end and the first negative electrode end form a first battery port.

In an embodiment, the second positive electrode end and the second negative electrode end form a second battery port.

In an embodiment, currents flowing through the first battery port and the second battery port have the same current value.

In an embodiment, the current sampling unit includes a first current sampling resistor and a second current sampling resistor.

In an embodiment, the first current sampling resistor and the second current sampling resistor are connected in parallel, connected in series between the first positive electrode end and the positive electrode, and connected in series between the second positive electrode end and the positive electrode.

A second aspect of the present disclosure provides a battery. The battery includes a battery core and a first charging protection apparatus. The first charging protection apparatus includes a circuit board and a battery control circuit arranged on the circuit board. The battery control circuit is the battery control circuit according to the first aspect above.

In an embodiment, the battery further includes a first conductive sheet, a second conductive sheet, and a third conductive sheet. The battery core includes a metal housing, an electrode core assembly, a first cover plate, and a first rivet. The metal housing is a steel housing. The metal housing has an internal cavity and is provided with a first opening. The electrode core assembly is arranged in the metal housing. The first cover plate covers the first opening to accommodate the electrode core assembly in a closed space formed by the metal housing and the first cover plate. The first rivet is arranged on the first cover plate and is insulated from the first cover plate.

In an embodiment, the first charging protection apparatus is arranged on one side of the battery core provided with the first rivet. The first charging protection apparatus is provided with a first connection end connected to the battery core. The first connection end includes a positive electrode, a first negative electrode, and a second negative electrode. The first negative electrode is connected to the first cover plate through the first conductive sheet. The second negative electrode is connected to the first cover plate through the third conductive sheet. The positive electrode is connected to the first rivet through the second conductive sheet.

In an embodiment, a liquid injection hole is further formed in the first cover plate. The liquid injection hole penetrates through the first cover plate. A third aspect of the present disclosure provides an electronic device, including a battery according to the second aspect above and a body configured to accommodate the battery. The battery at least includes a first battery port and a second battery port. The first battery port and the second battery port are respectively electrically connected to corresponding ports in the body in a case that the battery is fixed to an interior of the body.

Compared with the related art, the present disclosure have the following beneficial effects:

According to the battery control circuit of the present disclosure, the first switch unit is connected between the positive electrode and the first positive electrode end. The positive electrode, the first switch unit, and the first positive electrode end are connected, and the first negative electrode end and the first negative electrode are connected to form a first conductive path. The second switch unit is connected between the positive electrode and the second positive electrode end. The positive electrode, the second switch unit, and the second positive electrode end are connected, and the second negative electrode end and the second negative electrode are connected to form a second conductive path. Therefore, both the first switch unit and the second switch unit are located at the positive electrode to implement high-end drive, which can avoid a problem of a short circuit caused by a non-insulated design of a low-end drive housing. According the present disclosure, one positive electrode, two negative electrodes, and three tabs are constructed to match a drive-end drive circuit design, which can effectively reduce heat generation of the circuit board during high-power charging, and can achieve high-power fast charging. The battery and the electronic device of the present disclosure can achieve the high-end drive. Moreover, the control unit can control the first switch unit and the second switch unit to be turned on or turned off according to actual situations, so as to protect the battery core.

### BRIEF DESCRIPTION OF THE DRAWINGS

FIG. 1 is a schematic modular diagram of a battery according to a first embodiment of the present disclosure.
FIG. 2 is a schematic structural diagram of the battery according to the first embodiment of the present disclosure.
FIG. 3 is a main view of a battery core according to the first embodiment of the present disclosure.
FIG. 4 is a vertical view of the battery core according to the first embodiment of the present disclosure.
FIG. 5 is a main view of a first charging protection apparatus according to an embodiment of the present disclosure.
FIG. 6 is a vertical view of a first charging protection apparatus according to an embodiment of the present disclosure.
FIG. 7 is a schematic diagram of a circuit of a battery according to an embodiment of the present disclosure.
FIG. 8 is a main view of a battery core according to a second embodiment of the present disclosure.
FIG. 9 is a vertical view of a battery core according to a second embodiment of the present disclosure.
FIG. 10 is a schematic structural diagram of a battery according to a second embodiment of the present disclosure.

### DETAILED DESCRIPTION

Embodiments of the present disclosure are described in detail below, and examples of the embodiments are shown in accompanying drawings, where the same or similar reference numerals throughout the description represent the same or similar elements or the elements having the same or similar functions. The embodiments described below with reference to the accompanying drawings are exemplary, and are intended to explain the present disclosure and cannot be construed as a limitation to the present disclosure.

In the description of the present disclosure, it is to be understood that orientation or position relationships indicated by the terms such as "length", "width", "upper", "lower", "front", "rear", and the like are based on orientation or position relationships shown in the accompanying drawings, and are merely for the convenience of describing the present disclosure and simplifying description rather than indicating or implying that the referred apparatus or element has to have a particular orientation or be constructed and operated in a particular orientation. Therefore, such terms cannot be construed as a limitation to the present disclosure.

In addition, terms "first" and "second" are used merely for the purpose of description, and cannot be construed as indicating or implying relative importance or implying a quantity of indicated technical features. Therefore, a feature limited by "first" or "second" may explicitly or implicitly include one or more of the features. In the description of the present disclosure, "multiple" means two or more, unless otherwise definitely and specifically limited.

In the present disclosure, unless otherwise explicitly specified or defined, the terms such as "interconnected", "connected", and "fixed" are to be interpreted broadly, may be, for example, fixedly connected, or detachably connected, or integrated, may be mechanically connected, or electrically connected, may be directly connected, or indirectly connected through an intermediate medium, or may be communication inside two elements or an interaction relationship between two elements. Those of ordinary skill in the art may understand specific meanings of the above terms in the present disclosure according to specific situations.

A first aspect of the present disclosure provides a battery control circuit, including a first connection end, a second connection end, and a circuit protection module. The first connection end is configured to connect a battery core. The first connection end includes a positive electrode, a first negative electrode, and a second negative electrode. The second connection end is configured to connect a device. The second connection end includes a first positive electrode end, a first negative electrode end, a second positive electrode end, and a second negative electrode end. The circuit protection module includes a first switch unit, a second switch unit, and a control unit. The first switch unit is connected between the positive electrode and the first positive electrode end. The positive electrode, the first switch unit, and the first positive electrode end are connected, and the first negative electrode end and the first negative electrode are connected to form a first conductive path. The second switch unit is connected between the positive electrode and the second positive electrode end. The positive electrode, the second switch unit, and the second positive electrode end are connected, and the second negative electrode end and the second negative electrode are connected to form a second conductive path. The control unit is configured to control the first switch unit to be turned on or turned off and control the second switch unit to be turned on or turned off.

A second aspect of the present disclosure provides a battery. The battery includes a battery core and a first charging protection apparatus. The first charging protection apparatus includes a circuit board and a battery control circuit arranged on the circuit board. The battery control circuit is the battery control circuit according to the first aspect above.

A third aspect of the present disclosure provides an electronic device, including a battery according to the second aspect above and a body configured to accommodate the battery. The battery is the battery according to the second aspect above. The battery at least includes a first battery port and a second battery port. The first battery port and the second battery port are respectively electrically connected to corresponding ports in the body in a case that the battery is fixed to an interior of the body.

Compared with the related art, the present disclosure have the following beneficial effects:
According to the battery control circuit of the present disclosure, the first switch unit is connected between the positive electrode and the first positive electrode end. The positive electrode, the first switch unit, and the first positive electrode end are connected, and the first negative electrode end and the first negative electrode are connected to form a first conductive path. The second switch unit is connected between the positive electrode and the second positive electrode end. The positive electrode, the second switch unit, and the second positive electrode end are connected, and the second negative electrode end and the second negative electrode are connected to form a second conductive path. Therefore, both the first switch unit and the second switch unit are located at the positive electrode to implement high-end drive, which can avoid a problem of a short circuit caused by a non-insulated design of a low-end drive housing. According the present disclosure, one positive electrode, two negative electrodes, and three tabs are constructed to match a drive-end drive circuit design, which can effectively reduce heat generation of the circuit board during high-power charging, and can achieve high-power fast charging. The battery and the electronic device of the present disclosure can achieve the high-end drive. Moreover, the control unit can control the first switch unit and the second switch unit to be turned on or turned off according to actual situations, so as to protect the battery core.

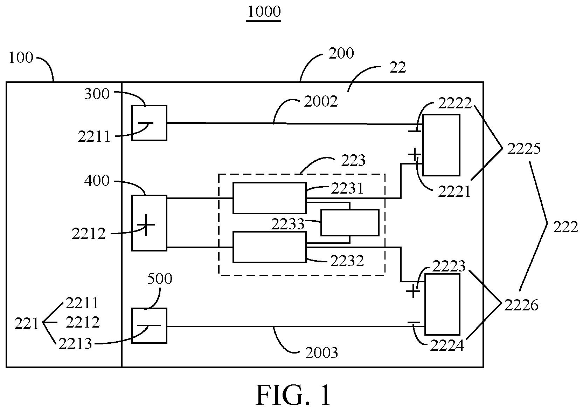

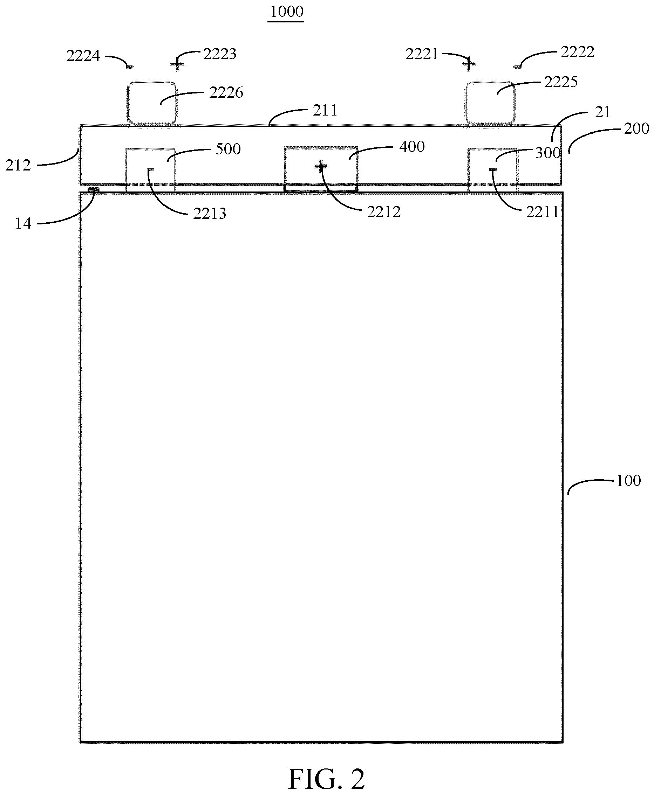

Referring to FIG. 1 and FIG. 2, FIG. 1 is a schematic modular diagram of a battery according to a first embodiment of the present disclosure. FIG. 2 is a schematic structural diagram of the battery according to the first embodiment of the present disclosure. The battery 1000 includes a battery core 100 and a first charging protection apparatus 200. The first charging protection apparatus 200 is configured to achieve fast charging in a case of protecting the safety of the battery core 100. The battery 1000 further includes a first conductive sheet 300, a second conductive sheet 400, and a third conductive sheet 500. It may be understood that the battery 1000 further includes other assemblies, which are not described in detail herein.

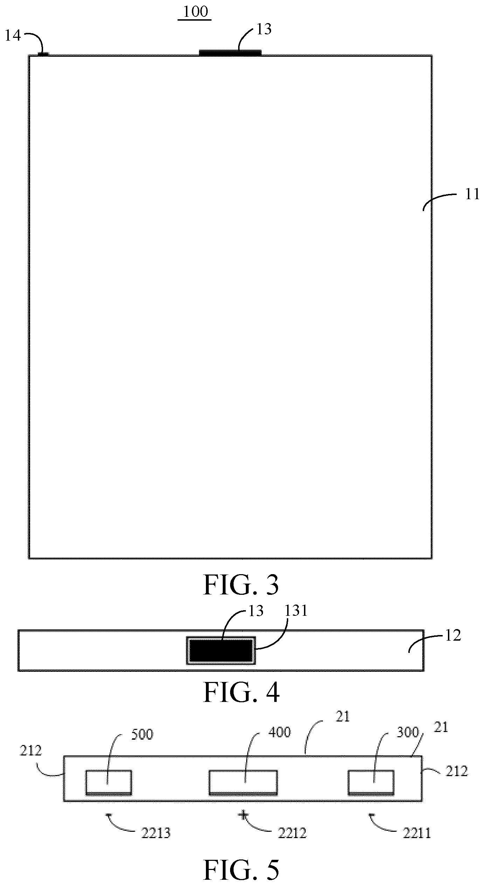

Referring to FIG. 3 and FIG. 4, FIG. 3 is a main view of the battery core 100 according to the first embodiment of the present disclosure. FIG. 4 is a vertical view of the battery core 100 according to the first embodiment of the present disclosure. The battery core 100 includes a metal housing 11, an electrode core assembly (not shown in the drawings), a first cover plate 12, and a first rivet 13. The metal housing 11 has an internal cavity (not shown in the drawings) and a first opening (not shown in the drawings) communicated with the internal cavity. The electrode core assembly is arranged in the internal cavity of the metal housing 11. The first cover plate 12 covers the first opening of the metal housing 11 to accommodate the electrode core assembly in a closed space formed by the metal housing 11 and the first cover plate 12, the first rivet 13 is arranged on the first cover plate 12, and the first rivet 13 is insulated from the first cover plate 12. A liquid injection hole 14 that penetrates through the first cover plate 12 is further provided in the first cover plate 12. The liquid injection hole 14 is configured to inject an electrolyte into the internal cavity of the battery core 100. Referring to FIG. 1, FIG. 2, FIG. 3, and FIG. 4 again, the first charging protection apparatus 200 is arranged on a side of the battery core 100 provided with the first rivet 13. The first charging protection apparatus 200 is provided with a first connection end 221. The first connection end 221 is configured to connect the battery core 100. The first connection end 221 includes a positive electrode 2212, a first negative electrode 2211, and a second negative electrode 2213. The first negative electrode 2211 is connected to the first cover plate 12 through the first conductive sheet 300, the second negative electrode 2213 is connected to the first cover plate 12 through the third conductive sheet 500, and the positive electrode 2212 is connected to the first rivet 13 through the second conductive sheet 400.

In one of the embodiments, the battery 1000 is a steel housing battery. The metal housing 11 is a steel housing. Therefore, the battery core 100 is a battery core of the steel housing battery, and the first charging protection apparatus 200 is a first charging protection apparatus of the steel housing battery. It may be understood that, in other embodiments, the metal housing 11 may alternatively be a housing made of other metal materials, and the first charging protection apparatus 200 may be a charging protection apparatus for other types of batteries.

In one of the embodiments, the first rivet 13 is insulated from the first cover plate 12 by arranging a first insulating part 131, so as to achieve an insulating design between the first rivet 13 and the first cover plate 12 through the first insulating part 131.

In one of the embodiments, the first cover plate 12 may be welded on the first opening of the metal housing 11. It may be understood that, in other embodiments, the first cover plate 12 may alternatively be arranged on the first opening of the metal housing 11 in other manners.

In one of the embodiments, a position of the second conductive sheet 400 is fixed, that is, arranged on the first rivet 13. However, positions of the third conductive sheet 300 and the third conductive sheet 500 are adjustable, that is, may be arranged at any position on the first cover plate 12 other than the position of the first rivet 13, or, may be arranged on the metal housing 11.

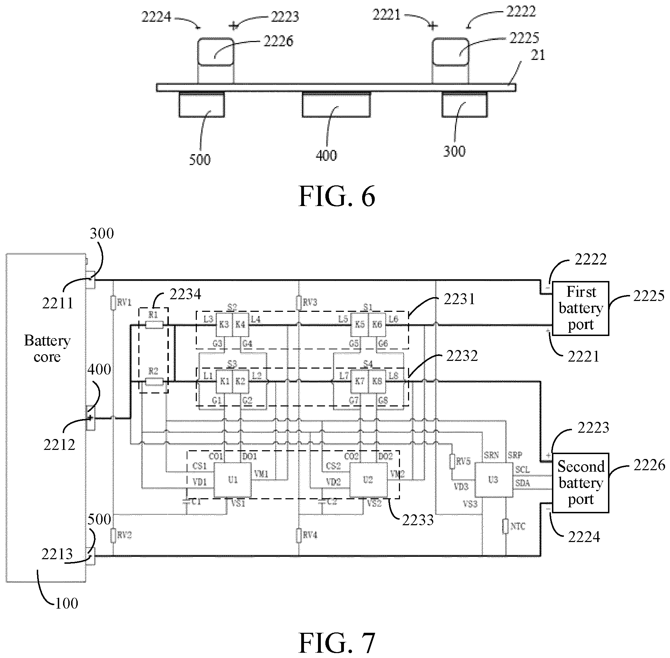

Referring to FIG. 5 and FIG. 6 together, the first charging protection apparatus 200 includes a circuit board 21 and a battery control circuit 22 arranged on the circuit board 21.

Referring to FIG. 1 and FIG. 2 together, the battery control circuit 22 includes:
a first connection end 221, configured to connect the battery core 100, where the first connection end 221 includes a positive electrode 2212, a first negative electrode 2211, and a second negative electrode 2213;
a second connection end 222, configured to connect a device outside the battery, where the second connection end 222 includes a first positive electrode end 2221, a first negative electrode end 2222, a second positive electrode end 2223, and a second negative electrode end 2224; and
a circuit protection module 223, including:
   a first switch unit 2231, where the first switch unit 2231 is connected between the positive electrode 2212 and the first positive electrode end 2221, the positive electrode 2212, the first switch unit 2231, and the first positive electrode end 2221 are connected, and the first negative electrode end 2222 and the first negative electrode 2211 are connected to form a first conductive path 2002;
   a second switch unit 2232, where the second switch unit 2232 is connected between the positive electrode 2212 and the second positive electrode end 2223, the positive electrode 2212, the second switch unit 2232, and the second positive electrode end 2223 are connected, and the second negative electrode end 2224 and the second negative electrode 2213 are connected to form a second conductive path 2003; and
   a control unit 2233, where the control unit 2233 is configured to control the first switch unit 2231 to be turned on or turned off and control the second switch unit 2232 to be turned on or turned off.

Therefore, according to the battery control circuit 22 in the present disclosure, the first switch unit 2231 is arranged between the positive electrode 2212 and the first positive electrode end 2221, and the second switch unit 2232 is arranged between the positive electrode 2212 and the second positive electrode end 2223, that is, both the first switch unit 2231 and the second switch unit 2232 are located at the positive electrode to implement high-end drive, which can avoid a problem of a short circuit caused by a non-insulated design of a low-end drive housing. Moreover, the control unit 2233 can control the first switch unit 2231 and the second switch unit 2232 to be turned on or turned off according to actual situations, which can protect the battery core 100.

In addition, high-end drive of the battery 1000 may well utilize characteristics of negative polarity of the metal housing 11 and the first cover plate 12, and positive polarity of the first rivet 13 of the battery core 100, that is, a positive electrode-driven fast charging circuit with one positive electrode and two positive electrodes may be constructed, which can effectively solve a problem of a short circuit with the body of the electronic device caused by a non-insulated design of the battery core metal housing 11. The non-insulated design may improve battery capacity.

Further, in one of the embodiments, the control unit 2233 has high-end drive capacity, and a difference between a voltage output by the control unit 2233 and a voltage of the positive electrode 2212 is greater than or equal to zero.

Further, in one of the embodiments, a difference between a voltage output by the control unit 2233 and a voltage of the positive electrode 2212 is greater than or equal to 4 V.

Therefore, the control unit 2233 can achieve high-end drive.

Further, in one of the embodiments, the first charging protection apparatus 200 may transmit current through the first conductive path 2002 and the second conductive path 2003. The first positive electrode end 2221 and the first negative electrode end 2222 form a first battery port 2225, and the second positive electrode end 2223 and the second negative electrode end 2224 form a second battery port 2226. It may be understood that currents flowing through the first battery port 2225 and the second battery port 2226 are the same, which is conductive to protecting overall balance of a temperature rise of the first charging protection apparatus 200.

Further, in one of the embodiments, referring to FIG. 2 again, the circuit board 21 is strip-shaped, and includes two first edges 211 oppositely arranged and two second edges 212 oppositely arranged. A length of the first edge 211 is greater than a length of the second edge 212. The first edge 211 is arranged along a width direction of the battery core 100. The second edge 212 is perpendicular to the first edge 211. The first conductive sheet 300, the second conductive sheet 400, and the third conductive sheet 500 are arranged at intervals along the first edge 211. Referring to FIG. 5 and FIG. 6 simultaneously, the first conductive sheet 300, the second conductive sheet 400, and the third conductive sheet 500 are L-shaped. First ends of the first conductive sheet 300, the second conductive sheet 400, and the third conductive sheet 500 are mounted on the circuit board 21 through a surface mount technology (SMT), second ends of the first conductive sheet 300 and the third conductive sheet 500 are electrically connected to the first cover plate 12, and a second end of the second conductive sheet 400 is electrically connected to the first rivet 13.

In an embodiment, the first conductive sheet 300, the second conductive sheet 400, and the third conductive sheet 500 are nickel sheets, for example, may be implemented by, but is not limited to, nickel plated brass.

In an embodiment, the first conductive sheet 300, the second conductive sheet 400, and the third conductive sheet 500 are L-shaped, or may be in other shapes.

Referring to FIG. 7 together, FIG. 7 is a schematic diagram of a circuit of a first charging protection apparatus 200 according to a first embodiment of the present disclosure. The circuit protection module 223 further includes a current sampling unit 2234. The current sampling unit 2234 is connected in series between the first positive electrode end 2221 and the positive electrode 2212. The current sampling unit 2234 is further connected in series between the second positive electrode end 2223 and the positive electrode 2212. The control unit 2233 is configured to control the first switch unit 2231 and the second switch unit 2232 to be turned on or turned off based on a sampling current value of the current sampling unit 2234.

Further, in an embodiment, the current sampling unit 2234 includes a first current sampling resistor R1 and a second current sampling resistor R2. The first current sampling resistor R1 and the second current sampling resistor R2 are, after being connected in parallel, connected in series between the first positive electrode end 2221 and the positive electrode 2212, and are connected in series between the second positive electrode end 2223 and the positive electrode 2212.

Therefore, according to the present disclosure, magnitude of a passing current may be determined according to a voltage drop of two ends of the current sampling unit 2234, thereby controlling the first switch unit 2231 and the second switch unit 2232 to be turned on or turned off according to the magnitude of the current.

It may be understood that the current sampling unit 2234 may be multiple current sampling resistors connected in parallel. Therefore, heat generation may be reduced.

In an embodiment, the circuit protection module 223 includes a first protection circuit. The first protection circuit is configured to protect charging and discharging of the first conductive path 2002 and the second conductive path 2003 in a normal state. The first protection circuit is connected among the first negative electrode 2211, the positive electrode 2212, and the first battery port 2225, and is connected among the second negative electrode 2213, the positive electrode 2212, and the second battery port 2226. Specifically, in one of the embodiments, the first switch unit 2231 includes a first switch S2. The first switch S2 is connected in series between the first positive electrode end 2221 and the positive electrode 2212. The second switch unit 2232 includes a second switch S3. The second switch S3 is connected in series between the second positive electrode end 2223 and the positive electrode 2212. The control unit 2233 includes a first controller U1. The first controller U1 is connected to each of the first switch S2, the second switch S3, and the current sampling unit 2234 to form a first protection circuit. The first protection circuit is configured to control the first switch S2 and the second switch S3 to be turned on or turned off based on the sampling current value of the current sampling unit 2234, so as to protect the battery core 100. Specifically, the first controller U1 is responsible for detecting the magnitude of a charging and discharging current of the battery core 100. When the charging and discharging current exceeds a protection threshold, the first controller U1 of the first protection circuit controls the first switch S2 and the second switch S3 to be turned off to disconnect conductive paths between the positive electrode 2212 and the first battery port 2225 and between the positive electrode 2212 and the second battery port 2226, so as to protect the battery core 100.

Further, in an embodiment, the first controller U1 has a CO1 end and a DO1 end. The first switch S2 includes a charging switch K3 and a discharging switch K4. The second switch unit S3 includes a charging switch K1 and a discharging switch K2. The CO1 end and the DO1 end of the first controller U1 can output a voltage relative to the positive electrode 2212. The voltage may range from 4 to 5 V, from 4 to 6 V, or may be other voltages, that is, the voltage at the CO1 end and the DO1 end of U1 is 4 to 5 V, 4 to 6 V, or other voltages higher than the voltage of the positive electrode 2212. The CO1 end of the first controller U1 may be driven by a G3 end of the first switch S2 to turn on the charging switch K3 and driven by a G1 end of the second switch S3 to turn on the charging switch K1, and the DO1 end of the first controller U1 may be driven by a G4 end of the first switch S2 to turn on the discharging switch K4 and driven by a G2 end of the second switch S3 to turn on the charging switch K2, so that a conductive path is formed between an L3 end and an L4 end of the first switch S2, and a conductive path is formed between an L1 end and an L2 end of the first switch S3.

In an embodiment, the first protection circuit further includes a first voltage sampling resistor RV1 and a second voltage sampling resistor RV2. The first controller U1 is configured to sample a first voltage value between the first negative electrode 2211 and the positive electrode 2212 through the first voltage sampling resistor RV1, and sample a second voltage value between the positive electrode 2212 and the second negative electrode 2213 through the second voltage sampling resistor RV2 to obtain a first mean voltage of the first voltage value and the second voltage value. The first controller U1 further samples a sampling current value of the current sampling unit 2234. The first controller U1 is configured to control the first switch S2 and the second switch S3 to be turned off when at least one of the sampling current value or the first mean voltage exceeds a corresponding protection threshold.

In an embodiment, the battery control circuit 22 further includes a filter capacitor C1. The first controller U1, the first switch S2, the second switch S3, the first voltage sampling resistor RV1, the second voltage sampling resistor RV2, the first current sampling resistor R1, the second current sampling resistor R2, and the filter capacitor C1 together form the first protection circuit. The first controller U1 is a protection integrated circuit (IC) with a high-end voltage drive capacity. A VD1 end of the first controller U1 provides a working power input for the first controller U1, serves a current sampling signal line together with a CS1 end, and is connected at two ends after the first current sampling resistor R1 and the second current sampling resistor R2 are connected in parallel to determine whether the charging and discharging current exceeds a current protection threshold by reflecting a voltage drop at the two ends of the first current sampling resistor R1 and the second current sampling resistor R2. The VD1 end and a VS1 end of the first controller U1 together serve as a sampling signal line for a voltage of the battery core 100. The VS1 end is a zero potential point of the first controller U1. The first voltage sampling resistor RV1 is connected between the first negative electrode 2211 and the VS1 end of the first controller U1, and is configured to sample a first voltage value between the positive electrode 2212 and the first negative electrode 2211. The filter capacitor C1 is connected between the VD1 end and the VS1 end. The second voltage sampling resistor RV2 is connected between the second negative electrode 2213 and the VS1 end of the first controller U1, and is configured to sample a second voltage value between the positive electrode 2212 and the second negative electrode 2213 to obtain a first mean voltage of the first voltage value and the second voltage value. When the first mean voltage exceeds an over-voltage protection threshold of the first controller U1, a high level at the CO1 end of the first controller U1 changes into a low level, the first switch S2 and the second switch S3 are controlled to be turned off, and charging cannot be performed, so as to protect the battery core 100. When the first mean voltage is lower than an under-voltage protection threshold of the first controller U1, high levels at the CO1 end and the DO1 end of the first controller U1 change into low levels, the first switch S2 and the second switch S3 are controlled to be turned off, and discharging cannot be performed, so as to protect the battery core 100.

In an embodiment, the circuit protection module 223 includes a second protection circuit. The second protection circuit is configured to protect charging and discharging of the first conductive path 2002 and the second conductive path 2003 in a normal state. Specifically, the second protection circuit is connected among the first negative electrode 2211, the positive electrode 2212, and the first battery port 2225, and is connected among the positive electrode 2212, the second negative electrode 2213, and the second battery port 2226. Specifically, in one of the embodiments, the first switch unit 2231 includes a third switch S1. The third switch S1 is connected in series between the first positive electrode end 2221 and the positive electrode 2212. The second switch unit 2232 includes a fourth switch S4. The fourth switch S4 is connected in series between the second positive electrode end 2223 and the positive electrode 2212. The control unit 2233 includes a second controller U2. The second controller U2 is connected to each of the third switch S1, the fourth switch S4, and the current sampling unit 2234 to form a second protection circuit. The second protection circuit is configured to control the third switch S1 and the fourth switch S4 to be turned on or turned off based on the sampling current value of the current sampling unit 2234. Specifically, when the charging and discharging current of the battery core 100 exceeds a protection threshold, the second controller U2 controls the third switch S1 and the fourth switch S4 to be turned off to disconnect conductive paths between the positive electrode 2212 and the first battery port 2225 and between the positive electrode 2212 and the second battery port 2226, so as to protect the battery core 100.

It may be understood that the first protection circuit and the second protection circuit are double protection circuits independent of each other, which are configured to protect the battery core 100 at the same time. When one of the protection circuit fails to protect, the other protects the battery core 100. In a case that both the first protection circuit and the second protection circuit work normally, the first protection circuit logically perform a protection action first, particularly, a voltage protection function. Voltage protection includes over-voltage protection and under-voltage protection. The over-voltage protection threshold is usually about 4.6 V, and the under-voltage protection threshold is usually about 2.5 V

Specifically, in an embodiment, the third switch S1 includes a charging switch K5 and a discharging switch K6. The fourth switch S4 includes a charging switch K7 and a discharging switch K8. The second controller U2 has a high-end drive capacity. A CO2 end and a DO2 end of the second controller U2 output a voltage relative to the positive electrode 2212. The voltage ranges from 4 to 5 V, or from 4 to 6 V, or may be other voltages, that is, the CO2 end of the second controller U2 may be driven by a G5 end of the third switch S1 to turn on the charging switch K5 and driven by a G7 end of the fourth switch S4 to turn on the charging switch K7, and the DO2 end of the second controller U2 may be driven by a G6 end of the third switch S1 to turn on the discharging switch K6 and driven by a G8 end of the fourth switch S4 to turn on the discharging switch K8, so that a conductive path is formed between an L5 end and an L6 end of the third switch S1, and a conductive path is formed between an L7 end and an L8 end of the fourth switch S4. After the first switch S2, the second switch S3, the third switch S1, and the fourth switch S4 are all turned on, a charging and discharging circuit from the first battery port 2225 and the second battery port 2226 to the battery core 100 is completely connected, and a charging or discharging behavior may be performed.

It may be understood that, in an embodiment, the first switch S2, the second switch S3, the third switch S1, and the fourth switch S4 are voltage-driven MOSs, which are widely applied to the battery control circuit 22. Working principles of the first switch S2, the second switch S3, the third switch S1, and the fourth switch S4 are not described in detail herein. The first switch S2 and the second switch S3 are controlled to be turned on or turned off at the same time by the first controller U1. The third switch S1 and the fourth switch S4 are controlled to be turned on or turned off at the same time by the second controller U2. The first switch S2, the second switch S3, the third switch S1, and the fourth switch S4 have the same model and have symmetry on the same circuit board 21. For example, there may be one first switch S2, one second switch S3, one third switch S1, and one fourth switch S4, or one or more first switches S2, one or more second switches S3, one or more third switches S1, and one or more fourth switches S4 may be connected in parallel, and the numbers of the first switches S2, the second switches S3, the third switches S1, and the fourth switches S4 that are connected in parallel need to be the same. The first switches S2, the second switches S3, the third switches S1, and the fourth switches S4 may be connected in parallel respectively to reduce internal resistance and reduce heat. Taking connecting one first switch S2, one second switch S3, one third switch S1, and one fourth switch S4 in parallel as an example, there are eight switches in total. The switches connected in parallel adopts a back-to-back design in a layout, which can achieve minimum line impedance between parallel switches.

Therefore, an end of the first battery port 2225 close to the positive electrode 2212 (that is, the first rivet 13) is the first positive electrode end 2221 of the first battery port 2225, and the first positive electrode end 2221 of the first battery port 2225 is connected to the third switch S1 and the first switch S2 and converges to the first current sampling resistor R1. An end far away from the positive electrode 2212 is the first negative electrode end 2222 of the first battery port 2225. An end of the second battery port 2226 close to the positive electrode 2212 is the second positive electrode end 2223 of the second battery port 2226, and the second positive electrode end 2223 of the second battery port 2226 is connected to the fourth switch S4 and the second switch S3, and converges to the second current sampling resistor R2. An end far away from the positive electrode 2212 is the second negative electrode end 2224 of the second battery port 2226. There are double shunt structures from the first positive electrode end 2221 of the first battery port 2225 to the first switch unit 2231 and from the second positive electrode end 2223 of the second battery port 2226 to the second switch unit 2232. The first negative electrode end 2222 of the first battery port 2225 and the second negative electrode end 2224 of the second battery port 2226 are directly connected on the first cover plate 12 through the first negative electrode 2211 and the second negative electrode 2213. By using the negative polarity of the first cover plate 12, space for copper foil connection of the first negative electrode end 2222 of the first battery port 2225 and the second negative electrode end 2224 of the second battery port 2226 on the circuit board 21 is saved, a heat dissipation pressure of the circuit board 21 is reduced, and meanwhile, the metal housing 11 is equivalent to a large heat sink, which can quickly dissipate the heat generated on a current conduction path of the first negative electrode 2211 and the second negative electrode 2213. In addition, the first switch S2, the second switch S3, the third switch S1, the fourth switch S4, the first current sampling resistor R1, and the second current sampling resistor R2 are all arranged at the positive electrode end of the battery core 100 to achieve high-end drive. Moreover, the first controller U1 and the second controller U2 have high-end drive capacities, the CO1 end, the DO1 end, the CO2 end, and the DO2 end of the first controller U1 and the second controller U2 can output a higher voltage relative to that of the battery core 100, for example, one or more times the voltage of the battery core 100 to drive to turn on gate electrodes of the first switch unit 2231 and the second switch unit 2232.

In an embodiment, the second protection circuit further includes a third voltage sampling resistor RV3 and a fourth voltage sampling resistor RV4. The second controller U2 is configured to sample a third voltage value between the first negative electrode 2211 and the positive electrode 2212 through the third voltage sampling resistor RV3, and sample a fourth voltage value between the positive electrode 2212 and the second negative electrode 2213 through the fourth voltage sampling resistor RV4 to obtain a second mean voltage of the third voltage value and the fourth voltage value. The second controller U2 further samples a total current value of the current sampling unit 2234. The second controller U2 is configured to control the third switch S1 and the fourth switch S4 to be turned off when at least one of the sampling current value or the second mean voltage exceeds a corresponding protection threshold.

In an embodiment, the battery control circuit 22 further includes a second filter capacitor C2. The second controller U2, the third switch S1, the fourth switch S4, the third voltage sampling resistor RV3, the fourth voltage sampling resistor RV4, the first current sampling resistor R1, and the second current sampling resistor R2 together form the second protection circuit. The second controller U2 is a protection IC with a high-end voltage drive capacity. A VD2 end of the second controller U2 provides a working power input for the second controller U2, serves a current sampling signal line together with a CS2 end, and is connected at two ends after the first current sampling resistor R1 and the second current sampling resistor R2 are connected in parallel to determine whether the charging and discharging current exceeds a current protection threshold by reflecting a voltage drop at the two ends of the first current sampling resistor R1 and the second current sampling resistor R2. The third voltage sampling resistor RV3 and the fourth voltage sampling resistor RV4 provide voltage sampling for the second controller U2. The VD2 end and the VS2 end of the second controller U2 together serve as a voltage sampling signal line of the battery core. The VS2 end is a zero potential point of the second controller U2. The third voltage sampling resistor RV3 is connected between the first negative electrode 2211 and the VS2 end of the second controller U2, and is configured to sample a third voltage value between the positive electrode 2212 and the first negative electrode 2211. The fourth voltage sampling resistor RV4 is connected between the second negative electrode 2213 and the VS2 end of the second controller U2, and is configured to sample a fourth voltage value between the positive electrode 2212 and the second negative electrode 2213. The second mean voltage is obtained according to the third voltage value and the fourth voltage value. The filter capacitor C2 is connected between the VD2 end and the VS2 end. When the second mean voltage exceeds an over-voltage protection threshold of the second controller U2, a high level at the CO2 end of the second controller U2 changes into a low level, the third switch S1 and the fourth switch S4 are controlled to be turned off, and charging cannot be performed, so as to protect the battery core 100. When the second mean voltage is lower than an under-voltage protection threshold of the second controller U2, high levels at the CO2 end and the DO2 end of the second controller U2 change into a low level, the third switch S 1 and the fourth switch S4 are controlled to be turned off, and discharging cannot be performed, so as to protect the battery core 100.

In an embodiment, the battery control circuit 22 further includes a communication management circuit. The communication management circuit includes a third controller U3, a current sampling unit 2234, and a fifth voltage sampling resistor RV5. The third controller U3 is arranged adjacent to the first controller U1 or adjacent to the second controller U2. Optionally, in one of the embodiments, the third controller U3 may be integrated with the first controller U1, or integrated with the second controller U2. The third controller U3 includes a temperature sensing resistor NTC. The temperature sensing resistor NTC is configured to sense a temperature of the battery core 100, and is configured for an electronic device system to determine a charging policy. The fifth voltage sampling resistor RV5 is connected to the positive electrode 2212 and a VD3 end of the third controller U3. A VS3 end of the third controller U3 is connected to the first negative electrode 2211 and the second negative electrode 2213, and is configured to sample a fifth voltage value between the first negative electrode 2211 and the positive electrode 2212 and a sixth voltage value between the positive electrode 2212 and the second negative electrode 2213, and obtain a third mean voltage according to the fifth voltage value and the sixth voltage value. The third controller U3, the fifth voltage sampling resistor RV5, the temperature sensing resistor NTC, the first current sampling resistor R1, and the second current sampling resistor R2 together form the communication management circuit. A VD3 end of the third controller U3 is a voltage sampling end, the VD3 end is connected to the positive electrode 2212, and the VS3 end is a zero potential point of the third controller U3. The VS3 is connected to the first negative electrode 2211 and the second negative electrode 2213. An SRN end and an SPR end are current sampling signal lines, which are respectively connected to two ends after the first current sampling resistor R1 and the second current sampling resistor R2 are connected in parallel. An SCL end is a clock signal line, and an SDAend is a data signal line. The SCL end and the SDA end together realize an information interaction function between the communication management circuit and the electronic device. The third controller U3 samples voltage, current, and temperature values of the battery core 100, and reports to the electronic device for mounting the battery 1000 for the electronic device to make a corresponding decision.

As above, the first protection circuit, the second protection circuit, and the communication management circuit share the first current sampling resistor R1 and the second current sampling resistor R2. The first controller U1, the second controller U2, and the third controller U3 may determine magnitude of a current in the charging and discharging circuit by detecting the voltage drop at the two ends of the first current sampling resistor R1 and the second current sampling resistor R2, so as to perform corresponding determination and corresponding control.

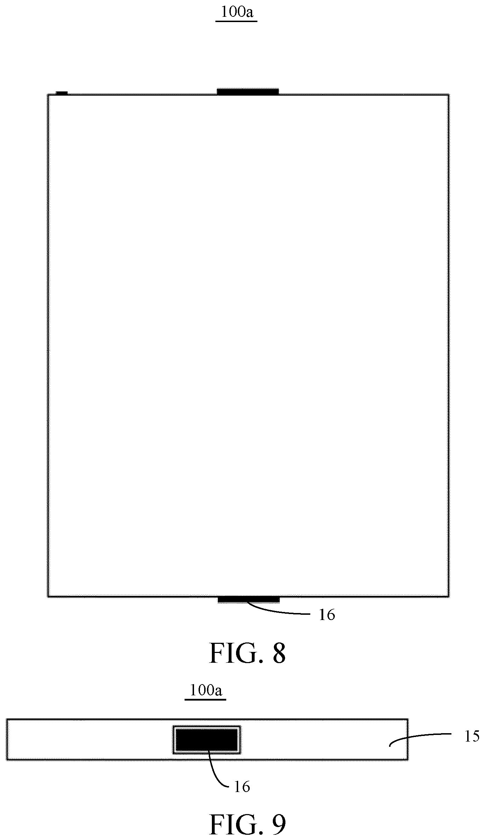

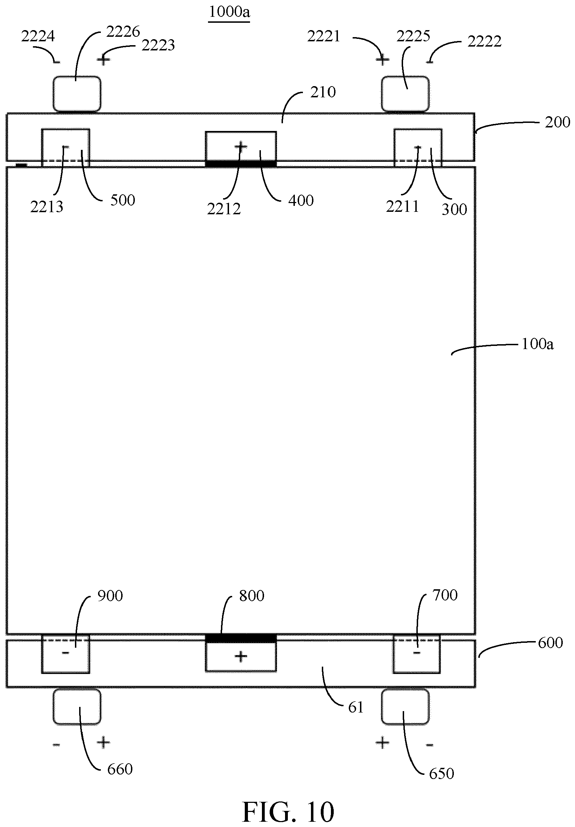

In an embodiment, referring to FIG. 8 to FIG. 10, FIG. 8 and FIG. 9 are schematic structural diagrams of a battery core 100a according to a second embodiment of the present disclosure. FIG. 10 is a schematic structural diagram of a battery according to a second embodiment of the present disclosure. Different from that in the first embodiment, in the second embodiment, the metal housing 11 is further provided with a second opening provided opposite to the first opening. The battery core 100a further includes a second cover plate 15. The second cover plate 15 covers the second opening to form a closed cavity. It may be understood that the second cover plate 15 may cover the second opening by, but not limited to, welding. A second rivet 16 is arranged on the second cover plate 15. The second rivet 16 penetrates through the second cover plate 15 to connect the positive electrode of the electrode core assembly. The second rivet 16 is insulated from the second cover plate 15. The negative electrode of the electrode core assembly is connected to the second cover plate 15. The battery 1000a further includes a second charging protection apparatus 600. The second charging protection apparatus 600 further includes a second circuit board 61 and a battery control circuit. It may be understood that the control circuit is similar to the battery control circuit 22 in the first embodiment, which is not described in detail here. The battery 1000a further includes a fourth conductive sheet 700, a fifth conductive sheet 800, and a sixth conductive sheet 900. The fourth conductive sheet 700 and the sixth conductive sheet 900 are located on both sides of the fifth conductive sheet 800. The second charging protection apparatus 600 further includes a third battery port 650 and a fourth battery port 660. Both the third battery port 650 and the fourth battery port 660 may be configured to charge and discharge.

Therefore, in this embodiment, an upper cover plate and a lower cover plate are arranged on the metal housing 11, that is, the first cover plate 12 and the second cover plate 15. The first rivet 13 is arranged on the first cover plate 12, and the second rivet 16 is arranged on the second cover plate 15. Therefore, the first battery port 2225, the second battery port 2226, the third battery port 650, and the fourth battery port 660 may be utilized for charging at the same time, which can double charging power. For example, 100 W fast charging may be implemented by using a single-rivet design, and 200 W fast charging may be implemented by using a double-rivet design.

In an embodiment, the third battery port 650 is arranged adjacent to the fourth conductive sheet 700, and the fourth battery port 660 is arranged adjacent to the sixth conductive sheet 900.

Further, in an embodiment, the second rivet 16is insulated from the second cover plate 15 through a second insulating part.

The present disclosure further provides an electronic device, including a battery and a body configured to accommodate the battery. The battery is the above battery 1000. The battery 1000 includes a first battery port 2225 and a second battery port 2226. The first battery port 2225 and the second battery port 2226 are respectively electrically connected to corresponding ports in the body in a case that the battery 1000 is fixed to an interior of the body.

In another embodiment, the above battery 1000a is provided. The battery 1000a includes a first battery port 2225, a second battery port 2226, a third battery port 650, and a fourth battery port 660. The first battery port 2225, the second battery port 2226, the third battery port 650, and the fourth battery port 660 are respectively electrically connected to corresponding ports in the body of the electronic device in a case that the battery 1000 is fixed to an interior of the body of the electronic device. Therefore, charging efficiency can be further improved.

In summary, it can be learned that the present disclosure has above excellent characteristics, which enables the present disclosure to enhance efficiency that has not been achieved in previous technologies and become a highly practical product.

The above descriptions are merely exemplary embodiments of the present disclosure, but are not intended to limit the present disclosure. Any modification, equivalent replacement, or improvement made without departing from the spirit and principle of the present disclosure fall within the scope of protection of the present disclosure.

## Claims

1. A battery control circuit (22), comprising:
a first connection end (221), configured to connect a battery core (100) of a battery, the first connection end (221) comprising a positive electrode (2212), a first negative electrode (2211), and a second negative electrode (2213);
a second connection end (222), configured to connect a device outside the battery, the second connection end (222) comprising a first positive electrode end (2221), a first negative electrode end (2222), a second positive electrode end (2223), and a second negative electrode end (2224); and
a circuit protection module (223), comprising:
a first switch unit (2231), connected between the positive electrode (2212) and the first positive electrode end (2221); the positive electrode (2212), the first switch unit (2231), and the first positive electrode end (2221) being connected, and the first negative electrode end (2222) and the first negative electrode (2211) being connected to form a first conductive path (2002);
a second switch unit (2232), connected between the positive electrode (2212) and the second positive electrode end (2223); the positive electrode (2212), the second switch unit (2232), and the second positive electrode end (2223) being connected, and the second negative electrode end (2224) and the second negative electrode (2213) being connected to form a second conductive path (2003); and
a control unit (2233), configured to control the first switch unit (2231) to be turned on or turned off and control the second switch unit (2232) to be turned on or turned off.

2. The battery control circuit (22) according to claim 1, wherein a difference between a voltage output by the control unit (2233) and a voltage of the positive electrode (2212) is greater than or equal to 4 V

3. The battery control circuit (22) according to claim 1 or 2, wherein the circuit protection module (223) further comprises a current sampling unit (2234), the current sampling unit (2234) is connected in series between the first positive electrode end (2221) and the positive electrode (2212), the current sampling unit (2234) is further connected in series between the second positive electrode end (2223) and the positive electrode (2212), and the control unit (2233) is configured to control the first switch unit (2231) and the second switch unit (2232) to be turned on or turned off based on a sampling current value of the current sampling unit (2234).

4. The battery control circuit (22) according to claim 3, wherein the first switch unit (2231) comprises a first switch (S2), the first switch (S2) is connected in series between the first positive electrode end (2221) and the positive electrode (2212), the second switch unit (2232) comprises a second switch (S3), the second switch (S3) is connected in series between the second positive electrode end (2223) and the positive electrode (2212), the control unit (2233) comprises a first controller (U1), the first controller (U1) is connected to each of the first switch (S2), the second switch (S3), and the current sampling unit (2234) to form a first protection circuit, and the first protection circuit is configured to control the first switch (S2) and the second switch (S3) to be turned on or turned off based on the sampling current value of the current sampling unit (2234).

5. The battery control circuit (22) according to claim 4, wherein the first protection circuit further comprises a first voltage sampling resistor (RV1) and a second voltage sampling resistor (RV2), the first controller (U1) is configured to sample a first voltage value between the first negative electrode (2211) and the positive electrode (2212) through the first voltage sampling resistor (RV1), and sample a second voltage value between the positive electrode (2212) and the second negative electrode (2213) through the second voltage sampling resistor (RV2) to obtain a first mean voltage of the first voltage value and the second voltage value.

6. The battery control circuit (22) according to claim 5, wherein the first controller (U1) is further configured to obtain a sampling current value of the current sampling unit (2234), and control the first switch (S2) and the second switch (S3) to be turned off when at least one of the sampling current value or the first mean voltage exceeds a corresponding protection threshold.

7. The battery control circuit (22) according to claim 3 or 4, wherein the first switch unit (2231) comprises a third switch (S1), the third switch (S1) is connected in series between the first positive electrode end (2221) and the positive electrode (2212), the second switch unit (2232) comprises a fourth switch (S4), the fourth switch (S4) is connected in series between the second positive electrode end (2223) and the positive electrode (2212), the control unit (2233) comprises a second controller (U2), the second controller (U2) is connected to each of the third switch (S1), the fourth switch (S4), and the current sampling unit (2234) to form a second protection circuit, and the second protection circuit is configured to control the third switch unit (S1) and the fourth switch (S4) to be turned on or turned off based on the sampling current value of the current sampling unit (2234).

8. The battery control circuit (22) according to claim 7, wherein the second protection circuit further comprises a third voltage sampling resistor (RV3) and a fourth voltage sampling resistor (RV4), the second controller (U2) is configured to sample a third voltage value between the first negative electrode (2211) and the positive electrode (2212) through the third voltage sampling resistor (RV3), and sample a fourth voltage value between the positive electrode (2212) and the second negative electrode (2213) through the fourth voltage sampling resistor (RV4) to obtain a second mean voltage of the third voltage value and the fourth voltage value.

9. The battery control circuit (22) according to claim 8, wherein the second controller (U2) is further configured to obtain a sampling current value of the current sampling unit (2234), and control the third switch (S1) and the fourth switch (S4) to be turned off when at least one of the sampling current value or the second mean voltage exceeds a corresponding protection threshold.

10. The battery control circuit (22) according to any one of claims 1 to 9, wherein the first positive electrode end (2221) and the first negative electrode end (2222) form a first battery port (2225).

11. The battery control circuit (22) according to any one of claims 1 to 10, wherein the second positive electrode end (2223) and the second negative electrode end (2224) form a second battery port (2226).

12. The battery control circuit (22) according to claim 11, wherein currents flowing through the first battery port (2225) and the second battery port (2226) have the same current value.

13. The battery control circuit (22) according to any one of claims 3 to 12, wherein the current sampling unit (2234) comprises a first current sampling resistor (R1) and a second current sampling resistor (R2).

14. The battery control circuit (22) according to claim 13, wherein the first current sampling resistor (R1) and the second current sampling resistor (R2) are connected in parallel, connected in series between the first positive electrode end (2221) and the positive electrode (2212), and connected in series between the second positive electrode end (2223) and the positive electrode (2212).

15. A battery (1000), comprising a battery core (100) and a first charging protection apparatus (200), the first charging protection apparatus (200) comprising a circuit board (21) and a battery control circuit (22) arranged on the circuit board, wherein the battery control circuit is the battery control circuit according to any one of claims 1 to 15.

16. The battery (1000) according to claim 15, further comprising a first conductive sheet (300), a second conductive sheet (400), and a third conductive sheet (500); the battery core (100) comprising a metal housing (11), an electrode core assembly, a first cover plate (12), and a first rivet (13); the metal housing (11) being a steel housing, the metal housing (11) having an internal cavity and being provided with a first opening, the electrode core assembly being arranged in the metal housing (11), the first cover plate (12) covering the first opening to accommodate the electrode core assembly in a closed space formed by the metal housing (11) and the first cover plate (12), and the first rivet (13) being arranged on the first cover plate (12) and being insulated from the first cover plate (12).

17. The battery (1000) according to claim 16, wherein the first charging protection apparatus (200) is arranged on a side of the battery core (100) provided with the first rivet (13), the first charging protection apparatus (200) is provided with a first connection end (221) connected to the battery core (100), the first negative electrode (2211) is connected to the first cover plate (12) through the first conductive sheet (300), the second negative electrode (2213) is connected to the first cover plate (12) through the third conductive sheet (500), and the positive electrode (2212) is connected to the first rivet (13) through the second conductive sheet (400).

18. The battery (1000) according to any one of claims 15 to 17, wherein a liquid injection hole (14) is further formed in the first cover plate (12), wherein the liquid injection hole (14) penetrates through the first cover plate (12).

19. An electronic device, comprising: a battery (1000) according to any one of claims 15 to 18 and a body configured to accommodate the battery, the battery (1000) at least comprising a first battery port (2225) and a second battery port (2226), and the first battery port and the second battery port are respectively electrically connected to corresponding ports in the body in a case that the battery (1000) is fixed to an interior of the body.
